# EUROPÄISCHE PATENTANMELDUNG

(11) **EP 1 122 804 A2**
(43) Veröffentlichungstag der Anmeldung: **08.08.2001**
(21) Anmeldenummer: 01102531.9
(22) Anmeldetag: 06.02.2001
(51) Int. Cl.: H01M 4/66, H01G 9/00

(54) **Stromkollektorelektrode und Verfahren zu ihrer Herstellung**

(30) Priorität: 07.02.2000 DE 10005123
(71) Anmelder: Becromal S.p.A., I-20089 Quinto de' Stampi Rozzano (MI) (IT)
(72) Erfinder: Chiavarotti, Giovanni Pietro, 20152 Milano (IT); Rossi, Christian, 20080 Vermezzo (IT); Vono, Giuseppe, 20090 Pieve Emanuele (IT)
(74) Vertreter: KEIL & SCHAAFHAUSEN

(57) **Zusammenfassung**

Die Erfindung betrifft eine Stromkollektorelektrode sowie ein Verfahren zu ihrer Herstellung, insbesondere als Elektrode für Kondensatoren, wie Doppelschicht-Kondensatoren (Superkondensatoren) und Elektrolytkondensatoren, Batterien oder dgl. elektrische Vorrichtungen, bei welchem auf eine Unterlage, bspw. eine Metallfolie, wie eine Aluminiumfolie, eine poröse Schicht, bspw. aus Graphit oder Titan, aufgebracht und die poröse Schicht zur Verringerung des Durchgangswiderstandes mit einer Schicht aus Polypyrrol belegt wird.

## Beschreibung

Die Erfindung betrifft ein Verfahren zur Herstellung einer Stromkollektorelektrode, insbesondere für Kondensatoren, wie Doppelschicht-Kondensatoren (Superkondensatoren) und Elektrolytkondensatoren, Batterien oder dgl. elektrische Vorrichtungen, bei welchem auf eine Unterlage, bspw. eine Metallfolie, wie eine Aluminiumfolie, eine poröse elektrisch leitende Schicht, bspw. aus Graphit oder Titan, aufgebracht wird, sowie eine so hergestellte Stromkollektorelektrode.

Viele elektrische Vorrichtungen, wie Kondensatoren, Batterien, oder dgl., benötigen Kollektorelektroden, welche den elektrischen Strom aufnehmen und deswegen einen minimalen Durchgangswiderstand aufweisen sollen. Aus der EP 0 974 989 sind Elektroden aus Metallfolien bekannt, auf die eine poröse Graphitschicht durch chemische Ablagerung aufgebracht ist. An Stelle des Graphits können auch ein Metall, vorzugsweise ein Ventilmetall, wie Titan, Tantal oder deren Metalllegierungen, aufgedampft werden. Wie dies vorzugsweise geschieht, ist in der deutschen Patentanmeldung 100 05 124.3 vom 7. Februar 2000 der gleichen Anmelderin geschildert. Hierauf wird zum Zwecke der Offenbarung in der vorliegenden Anmeldung ausdrücklich Bezug genommen. Als Unterlage wird z.B. eine Metallfolie, wie eine Alu-miniumfolie, verwendet. Solche Schichten weisen aufgrund ihrer Porösität zwar eine große spezifische Oberfläche, jedoch einen vergleichweise hohen Durchgangs-widerstand auf, wodurch die Fähigkeit als Stromaufnahmeelektrode zu fungieren, leidet.

Aufgabe der vorliegenden Erfindung ist es daher, eine Stromkollektorelektrode der eingangs genannten Art mit verbessertem Durchgangswiderstand zu schaffen.

Diese Aufgabe wird bei einem Verfahren zur Herstellung einer Stromkollektorelektrode der eingangs genannten Art z.B. dadurch gelöst, dass die poröse Schicht mit einer Schicht aus Polypyrrol belegt, insbesondere imprägniert wird.

Die Schicht aus Polypyrrol hat einen einer metallenen Schicht vergleichbaren spezifischen elektrischen Widerstand. Durch Imprägnierung der Oberfläche mit einer großflächigen, dünnen Schicht aus Polypyrrol wird trotz der Porosität der elektrisch leitenden Schicht, aus z.B. Graphit oder Titan, der elektrische Durchgangswiderstand der Elektrode deutlich gesenkt.

Besonders einfach wird die Schicht aus Polypyrrol unter Polymerisierung von Pyrrol aufgebracht.

Dazu wird z.B. die Unterlage mit der porösen Schicht in eine Lösung mit Polypyrrol und/oder Pyrrol getaucht. Da die Bildung der Polypyrrolschicht unter Polymerisierung einer flüssigen Komponente erreicht wird, überdeckt die Polypyrrol-Schicht die gesamte aktive Fläche der porösen Schicht, bspw. aus Graphit oder Titan. Durch Eintauchen der Unterlage mit der porösen Schicht in eine ein Oxidationsmittel enthaltende Lösung kann die Polymerisierung des Monomers bewirkt werden.

Das Eintauchen der Unterlage mit der porösen Schicht in die Lösungen wird wiederholt, bis die Schicht aus Polypyrrol die gewünschte Dicke aufweist. Auf diese Weise kann der elektrische Widerstandswert der Schicht aus Polypyrrol optimiert werden.

Vorzugsweise weist die Lösung mit Polypyrrol und/oder Pyrrol eine Konzentration zwischen etwa 0.1 und 1 Mol dieser Komponente(n) auf.

Nach dem Aufbringen wird die Schicht aus Polypyrrol vorzugsweise bei erhöhter Temperatur getrocknet. Als vorteilhaft hat sich eine Temperatur von etwa 100°C erwiesen.

Als besonders geeignete Unterlage dient eine Aluminiumfolie mit einer Reinheit zwischen etwa 98,0% und 99,8%. Die Aluminiumfolie soll bevorzugt eine Dicke zwischen etwa 15 und 100 µm aufweisen. Je nach Anwendungszweck können aber auch andere Metallfolien verwendet werden. Es ist ferner denkbar, als Unterlage eine Isolierfolie aus einem Kunststoffmaterial mit einer leitenden Auflage, bspw. aus Aluminium, zu verwenden.

Ferner bezieht sich die Erfindung auf eine Stromkollektorelektrode, insbesondere für Kondensatoren, wie Doppelschicht-Kondensatoren (Superkondensatoren) und Elektrolytkondensatoren, Batterien oder dgl. elektrische Vorrichtungen, mit einer Unterlage, bspw. einer Metallfolie wie einer Aluminiumfolie, auf die eine poröse Schicht, bspw. aus Graphit oder Titan, aufgebracht ist, welche ihrerseits mit einer Schicht aus Polypyrrol belegt, insbesondere imprägniert ist. Die Elektrode wird vorzugsweise nach dem zuvor beschriebenen Verfahren hergestellt.

Durch das Imprägnieren der porösen elektrisch leitenden Schicht mit einer Schicht aus Polypyrrol wird eine Elektrode geschaffen, die sich besonders gut als Stromkollektorelektrode einsetzen lässt, da sie einen kleinen Durchgangswiderstand aufweist. Diese Elektroden eignen sich auch besonders für einen nach dem Prinzip der Helmholzschen Doppelschicht und einer Diffusionsschicht arbeitenden Doppelschicht-Kondensator (Superkondensatoren) oder als Kathode eines Elektrolytkondensators. Ebenso kann die Elektrode bspw. als Elektrode in eine Batterie eingesetzt werden.

## Patentansprüche

1. Verfahren zur Herstellung einer Stromkollektorelektrode, insbesondere für Kondensatoren, wie Doppelschicht-Kondensatoren (Superkondensatoren) und Elektrolytkondensatoren, Batterien oder dgl. elektrische Vorrichtungen, bei welchem auf eine Unterlage, bspw. eine Metallfolie, wie eine Aluminiumfolie, eine poröse elektrisch leitende Schicht, bspw. aus Graphit oder Titan, aufgebracht wird, **dadurch gekennzeichnet,** dass die poröse Schicht mit einer Schicht aus Polypyrrol belegt, insbesondere imprägniert wird.

2. Verfahren nach Anspruch 1, **dadurch gekennzeichnet,** dass die Schicht aus Polypyrrol unter Polymerisierung von Pyrrol aufgebracht wird.

3. Verfahren nach Anspruch 1 oder 2, **dadurch gekennzeichnet,** dass die Unterlage mit der porösen Schicht in eine mit Polypyrrol und/oder Pyrrol enthaltende Lösung und anschließend in eine ein Oxidationsmittel enthaltende Lösung getaucht wird.

4. Verfahren nach Anspruch 3, **dadurch gekennzeichnet,** dass das Eintauchen der Unterlage mit der porösen Schicht in die Lösungen wiederholt wird, bis die Schicht aus Polypyrrol die gewünschte Dicke aufweist.

5. Verfahren nach Anspruch 3 oder 4, **dadurch gekennzeichnet,** dass die mit Polypyrrol und/oder Pyrrol enthaltende Lösung eine Konzentration zwischen etwa 0.1 und 1 Mol dieser Komponente(n) aufweist.

6. Verfahren nach einem der vorhergehenden Ansprüche, **dadurch gekennzeichnet,** dass die Schicht aus Polypyrrol nach dem Aufbringen bei erhöhter Temperatur getrocknet wird.

7. Verfahren nach Anspruch 6, **dadurch gekennzeichnet,** dass die Temperatur etwa 100°C beträgt.

8. Verfahren nach einem der vorhergehenden Ansprüche, **dadurch gekennzeichnet,** dass die poröse Schicht und/oder die Schicht aus Polypyrrol auf beiden Seiten der Unterlage aufgebracht wird.

9. Verfahren nach einem der vorhergehenden Ansprüche, **dadurch gekennzeichnet,** dass als Unterlage eine Aluminiumfolie mit einer Reinheit zwischen etwa 98.0% und 99.8% dient.

10. Verfahren nach einem der vorhergehenden Ansprüche, **dadurch gekennzeichnet,** dass als Unterlage eine Aluminiumfolie mit einer Dicke zwischen etwa 15 und 100 µm dient.

11. Stromkollektorelektrode, insbesondere für Kondensatoren, wie Doppelschicht-Kondensatoren (Superkondensatoren) und Elektrolytkondensatoren, Batterien oder dgl. elektrische Vorrichtungen mit einer Unterlage, bspw. einer Metallfolie, wie eine Aluminiumfolie, auf die eine poröse Schicht, bspw. aus Graphit oder Titan, aufgebracht ist, **dadurch gekennzeichnet,** dass die poröse Schicht mit einer Schicht aus Polypyrrol belegt, insbesondere imprägniert ist.

12. Stromkollektorelektrode nach Anspruch 11, **dadurch gekennzeichnet,** dass die Schicht aus Polypyrrol unter Polymerisierung von Pyrrol aufgebracht ist.

13. Stromkollektorelektrode nach Anspruch 11 oder 12, **dadurch gekennzeichnet,** dass die Unterlage eine Aluminiumfolie mit einer Reinheit zwischen etwa 98.0% und 99.8% ist.

14. Stromkollektorelektrode nach einem der Ansprüche 11 bis 13, **dadurch gekennzeichnet,** dass die Unterlage eine Alu-miniumfolie mit einer Dicke zwischen etwa 15 und 100 um ist.

15. Stromkollektorelektrode nach einem der Ansprüche 11 bis 14, **dadurch gekennzeichnet,** dass sie nach einem Verfahren gemäß einem der Ansprüche 1 bis 10 hergestellt ist.
